# EUROPÄISCHE PATENTSCHRIFT

(11) **EP 1 941 932 B1**
(45) Veröffentlichungstag und Bekanntmachung des Hinweises auf die Patenterteilung: **13.05.2009**
(21) Anmeldenummer: 06122596.7
(22) Anmeldetag: 19.10.2006
(51) Int. Cl.: A62C 39/00, G01F 17/00, G01M 3/20

(54) **Verfahren zum Bestimmen der Luftdichtigkeit von umschlossenen Räumen**
A method to determine the airtightness of enclosed chambers
Procédé pour déterminer l'étanchéité à l'air des espaces enclavé

(43) Veröffentlichungstag der Anmeldung: 09.07.2008
(73) Patentinhaber: Amrona AG, 6302 Zug (CH)
(72) Erfinder:
(74) Vertreter: Rupprecht, Kay

(56) Entgegenhaltungen:
- DE-A1- 10 251 536
- FR-A1- 2 834 066
- JP-A- 63 214 635

## Beschreibung

Die Erfindung betrifft ein Verfahren zum Bestimmen der Luftdichtigkeit von umschlossenen Räumen. Insbesondere betrifft die Erfindung ein Verfahren, um für dauerinertisierbare Räume, bei welchen zur Brandverhütung und/oder zur Brandlöschung ein Inertisierungsverfahren eingesetzt wird, den entsprechenden volumenbezogenen Leckagestrom möglichst genau bestimmen zu können.

Das Dokument FR 2 834 066 A1 offenbart ein Verfahren zur Leckdetektion mittels Sauerstoff-Gassensoren. Das herkömmliche Meßprinzip beruht darauf, dass der Gaspartialdruck am Sensorelement durch ein eindringendes bzw. austretendes inertes oder reaktives Prüfgas verändert wird.

Das Dokument DE 102 51 536 A1 offenbart ein Verfahren zur Minimierung des Begasungsmitteleinsatzes bei Begasungen und zur Lecksuche bei Begasungen. Bei dem herkömmlichen Verfahren werden Testgase eingesetzt, mit denen sich Nachdosierungen vermeiden lassen.

Das Dokument JP 63 214635 A offenbart ein weiteres Verfahren zur Leckdetektion, bei welchem in die Atmosphäre eines umschlossenen Behälters ein Testgas eingebracht wird. Anschließend wird der im Hinblick auf die Gasdichtigkeit zu untersuchende Körper in den Behälter eingebracht, wobei mit Hilfe eines in dem Körper eingebauten Gassensors geprüft wird, ob das Testgas durch die Wandung des Körpers in den Körper eindringt.

Inertisierungsverfahren zur Minderung des Risikos eines Brandes in einem umschlossenen Raum sind aus der Feuerlöschtechnik bekannt. Üblicherweise wird bei diesen Inertisierungsverfahren durch Einleiten eines sauerstoffverdrängenden Gases aus einer Inertgasquelle die Raumluftatmösphäre des umschlossenen Raums auf ein unter der Sauerstoffkonzentration der Umgebungsluftatmosphäre liegendes Inertisierungsniveau abgesenkt und dort gehalten. Die bei diesem Verfahren resultierende Präventions- und Löschwirkung beruht auf dem Prinzip der Sauerstoffverdrängung. Die normale Umgebungsluft besteht bekanntlich zu etwa 21 Vol.-% aus Sauerstoff, zu 78 Vol.-% aus Stickstoff und zu 1 Vol.-% aus sonstigen Gasen. Um das Risiko einer Brandentstehung zu mindern bzw. um ein bereits ausgebrochenes Feuer im umschlossenen Raum zu löschen, wird durch Einleiten von beispielsweise reinem Stickstoff als Inertgas die Stickstoffkonzentration in dem betreffenden Raum weiter erhöht und somit der Sauerstoffanteil verringert. Es ist bekannt, dass eine Löschwirkung einsetzt, wenn der Sauerstoffanteil unter etwa 15 Vol.-% absinkt. Abhängig von den in den betreffenden Raum vorhandenen brennbaren Materialen kann ferner ein weiteres Absenken des Sauerstoffanteils auf beispielsweise 12 Vol.-% erforderlich sein. Bei dieser Sauerstoffkonzentration können die meisten brennbaren Materialien nicht mehr brennen.

Um bei einer zugehörigen Inertgasfeuerlöschanlage, bei welcher die vorstehend genannte Inertgaslöschtechnik zum Einsatz kommt, ein möglichst hohes Sicherheitsniveau zu erreichen, sind insbesondere anlagentechnische und logistische Planungen für den Fall eines Anlagenstillstandes als Folge von Störfällen erforderlich, um den sicherheitstechnischen Anforderungen gerecht zu werden. Auch wenn bei der Projektierung der Inertgasfeuerlöschanlage alle Maßnahmen berücksichtigt werden, die es erlauben, eine Wiederinbetriebnahme der Anlage möglichst schnell und übergangslos zu erreichen, bringt das Inertisieren von umschlossenen Räumen mittels der Inertgastechnik jedoch gewisse Probleme mit sich und weist in Bezug auf die Ausfallsicherheit klare Grenzen auf. So hat sich gezeigt, dass es zwar möglich ist, eine Inertgasfeuerlöschanlage derart zu konzipieren, dass die Wahrscheinlichkeit für das Auftreten eines Störfalls während der Absenkung bzw. Regelung des Sauerstoffgehalts im umschlossenen Raum auf einem Inertisierungsniveau relativ gering ist, jedoch besteht oftmals ein Problem darin, dieses abgesenkte Inertisierungsniveau für eine längere Zeit, und insbesondere für die sogenannten "Notbetriebsphase", auf dem erforderlichen Wert zu halten. Dies liegt insbesondere daran, weil bei den aus dem Stand der Technik bekannten Inertisierungsverfahren keine Möglichkeit besteht, ein frühzeitiges Überschreiten eines Rückzündungsniveaus der Sauerstoffkonzentration im umschlossenen Raum zu verhindern, wenn aufgrund eines Störfalls die Inertgasquelle ganz oder zumindest teilweise ausfällt.

Die vorstehend genannte Rückzündungsphase bezeichnet den Zeitabschnitt nach der sogenannten "Brandbekämpfungsphase", wobei in diesem Zeitabschnitt die Sauerstoffkonzentration im umschlossenen Raum einen bestimmten Wert, den so genannten "Rückzündungsverhinderungswert", nicht überschreiten darf, um ein erneutes Entzünden der im Schutzbereich vorhandenen Materialien zu vermeiden. Das Rückzündungsverhinderungsniveau ist dabei eine Sauerstoffkonzentration, die von der Brandlast des Raumes abhängt und anhand von Versuchen ermittelt wird. Gemäß den geltenden VdS-Richtlinien muss beim Fluten des umschlossenen Raumes die Sauerstoffkonzentration im umschlossenen Raum das Rückzündungsverhinderungsniveau von beispielsweise 13,8 Vol.-% innerhalb der ersten 60 Sekunden ab Flutungsbeginn erreicht werden. Diese 60 Sekunden ab Flutungsbeginn werden auch als "Brandbekämpfungsphase" bezeichnet.

Ferner darf auch das Rückzündungsverhinderungsniveau nicht innerhalb von 10 Minuten nach Ende der Brandbekämpfungsphase überschritten werden. Dabei ist vorgesehen, dass innerhalb der Brandbekämpfungsphase der Brand im Schutzbereich vollständig gelöscht wird. Die Zeitdauer (z.B. 10 Minuten) nach der Brandbekämpfungsphase, mit der sichergestellt werden soll, dass sich der in der Brandbekämpfungsphase bereits gelöschte Brand nicht wieder entzünden kann, wird als "Rückzündungsphase" bezeichnet.

Bei den aus dem Stand der Technik bekannten Inertisierungsverfahren wird üblicherweise unmittelbar nach der Erfassung eines Brandes im umschlossenen Raum die Sauerstoffkonzentration in der Raumluftatmosphäre möglichst schnell auf eine sogenannte "Betriebskonzentration" heruntergefahren. Das hierzu erforderliche Inertgas stammt dabei in der Regel aus einer entsprechenden Inertgasquelle der Inertgasfeuerlöschanlage. Unter dem Begriff "Betriebskonzentration" bzw. "Betriebskonzentrationsniveau" wird ein Inertisierungsniveau verstanden, das unterhalb einer so genannten, für den betreffenden Raum spezifischen "Auslegungskonzentration" liegt.

Die "Auslegungskonzentration" des betreffenden Raumes ist eine Sauerstoffkonzentration in der Raumluftatmosphäre, bei welcher die Entzündung eines jeden im umschlossenen Raum vorhandenen Stoffes wirksam verhindert wird. Das im betreffenden Raum eingestellte "Auslegungskonzentrationsniveau" entspricht somit dem Inertisierungsniveau, bei welchem die Entzündung eines jeden im umschlossenen Raum vorhandenen Stoffes wirksam verhindert wird. Bei der Festlegung der Auslegungskonzentration bzw. des Auslegungskonzentrationsniveaus eines Raumes wird in der Regel von dem Grenzwert bzw. dem "Grenzkonzentrationsniveau", bei dem ein Entzünden jeglicher Materialien im Raum unterbunden wird, noch ein zur Sicherheit dienender Abschlag abgezogen.

Nach Erreichen der Betriebskonzentration in der Raumluftatmosphäre des betreffenden Raumes wird üblicherweise die Sauerstoffkonzentration mit einer unter der Betriebskonzentration des Raumes liegenden Regelkonzentration auf einem sogenannten "Regelkonzentrationsniveau" gehalten. Diese Regelkonzentration ist ein Regelbereich der Restsauerstoffkonzentration in der inertisierten Raumluftatmosphäre, innerhalb welcher die Sauerstoffkonzentration während der Rückzündungsphase gehalten wird. Jener Regelbereich ist üblicherweise durch eine obere Grenze, welche die Einschaltschwelle für die Inertgasquelle der Inertgasfeuerlöschanlage definiert, und einer unteren Grenze, welche die Ausschaltschwelle der Inertgasquelle der Inertgasfeuerlöschanlage definiert, begrenzt. Während der Rückzündungsphase wird die Regelkonzentration üblicherweise durch wiederholtes Einleiten von Inertgas in diesem Regelbereich gehalten. Wie bereits angedeutet, stammt das hierzu erforderliche Inertgas üblicherweise aus dem als Inertgasquelle dienenden Reservoir der Inertgasfeuerlöschanlage, d.h. entweder aus dem Gerät zur Erzeugung von einem sauerstoffverdrängenden Gas (z.B. einem Stickstoffgenerator), aus Gasflaschen oder von anderen Puffereinrichtungen.

Im Falle einer Fehlfunktion oder Störung der Inertgasfeuerlöschanlage allerdings besteht die Gefahr, dass die Sauerstoffkonzentration in der Raumluftatmosphäre des umschlossenen Raumes frühzeitig ansteigt und somit das Rückzündungsverhinderungsniveau vor den genannten 10 Minuten nach Ende der Brandbekämpfungsphase bzw. vor dem Ende der Rückzündungsphase überschreitet. In solch einem Fall wäre die Rückzündungsphase verkürzt, und es kann unter Umständen eine erfolgreiche Brandbekämpfung in den umschlossenen Raum nicht mehr gewährleistet werden.

Unter Berücksichtigung der zuvor geschilderten Problemstellung hinsichtlich der sicherheitstechnischen Anforderungen einer Inertgasfeuerlöschanlage bzw. eines Inertisierungsverfahrens wird in der Druckschrift EP 1 550 481 A1 ein Inertisierungsverfahren vorgeschlagen, bei welchem der Sauerstoffgehalt in der Raumluftatmosphäre des umschlossenen Raumes auf eine unter der Betriebskonzentration des Raumes liegenden Regelkonzentration abgesenkt wird, wobei die Regelkonzentration und die Betriebskonzentration unter Bildung eines Ausfallsicherheitsabstandes soweit unter die für den umschlossenen Raum festgelegte Auslegungskonzentration gesenkt werden, dass die Anstiegskurve des Sauerstoffgehalts in der Raumluftatmosphäre bei Ausfall der Inertgasquelle eine für den umschlossenen Raum ermittelte Grenzkonzentration erst in einer vorgegebenen Zeit erreicht. Bei der Grenzkonzentration handelt es sich dabei insbesondere um das Rückzündungsverhinderungsniveau des umschlossenen Raumes.

Das Rückzündungsverhinderungsniveau entspricht einer Sauerstoffkonzentration in der Raumluftatmosphäre des umschlossenen Raumes, bei welcher sichergestellt ist, dass sich Brandstoffe im umschlossenen Raum nicht mehr entzünden lassen. Anders ausgedrückt ist bei der aus dem Stand der Technik bekannten Lösung vorgesehen, die Betriebskonzentration von vornherein soweit herunterzusetzen, dass die Anstiegskurve der Sauerstoffkonzentration den Grenzwert erst nach einer bestimmten Zeit erreicht, wobei diese bestimmte Zeit hinreichend ist, um eine Rückzündungsphase zu realisieren, in welcher der Sauerstoffgehalt nicht über ein Rückzündungsverhinderungsniveau steigt und somit wirksam ein Entzünden bzw. Wiederentzünden von Brandstoffen im umschlossenen Raum verhindert.

Durch dieses so genannte "Tieferfahren" der Betriebskonzentration, d.h. durch das Festlegen der Betriebskonzentration unter Bildung eines Ausfallsicherheitsabstandes unterhalb der Auslegungskonzentration des umschlossenen Raumes, kann sichergestellt werden, dass bei Ausfall der Inertgasquelle zumindest für eine Notbetriebszeit die Sauerstoffkonzentration unter dem Rückzündungsverhinderungsniveau gehalten wird.

Die Größe des Ausfallsicherheitsabstandes, d.h. die Frage, in welchem Ausmaß die Betriebskonzentration unterhalb der Auslegungskonzentration des umschlossenen Raumes abgesenkt werden muss, hängt insbesondere von der für den umschlossenen Raum geltenden Luftwechselrate ab. In der Inertgaslöschtechnik wird hierzu insbesondere der n50-Wert des betreffenden Raumes als Maß für die Luftdichtigkeit des Raumes herangezogen.

Die Luftwechselrate n50 ergibt sich aus dem Luftvolumenstrom, der sich pro Stunde einstellt, wenn eine Druckdifferenz von 50 Pa aufrechterhalten wird, dividiert durch das Gebäudevolumen. Demnach weist der umschlossene Raum einen umso höheren Luftdichtigkeitswert auf, je kleiner die Luftwechselrate ist.

Üblicherweise wird der n50-Wert als Maß für die Luftdichtigkeit eines Raumes mit einem Differenzdruck-Messverfahren (Blower-Door-Verfahren) gemessen. Insbesondere bei größeren Gebäuden bzw. Räumen ist das Durchführen einer Differenzdruck-Messreihe zum Ermitteln der Luftwechselrate n50 allerdings häufig nur mit gewissen Schwierigkeiten möglich, da es sich oftmals herausstellt, dass eine Druckdifferenz von 50 Pa zwischen der Raumluftatmosphäre im umschlossenen Raum und der Umgebungsluftatmosphäre außerhalb des umschlossenen Raums nicht erreicht werden kann. Des weiteren ist beim Durchführen einer Differenzdruck-Messung die Frage nicht auszuschließen, ob sich der Zustand des umschlossenen Raumes während der Messung, insbesondere im Hinblick auf die Luftwechselrate ändert. So ist es beispielsweise denkbar, dass ursprünglich abgedichtete Öffnungen aufgrund des zur Durchführung des Differenzdruck-Messverfahrens notwendigen Über- oder Unterdruckes im Raum undicht werden. Auch hat die Bestückung des umschlossenen Raumes mit Gegenständen bzw. Waren (insbesondere im Falle einer Lagerhalle) einen Einfluss auf die mit der Differenzdruck-Messung erfasste Luftwechselrate n50.

Da die Luftwechselrate des umschlossenen Raumes, wenn überhaupt, nur mit gewissen Unsicherheiten gemessen werden kann, ist es erforderlich, dass der Ausfallsicherheitsabstand bei dem zuvor erwähnten Inertisierungsverfahren mit einem entsprechend hohen Sicherheitsabschlag versehen wird, um den sicherheitstechnischen Anforderungen gerecht zu werden. Das Vorsehen eines derartigen Sicherheitsabschlages allerdings ist im Hinblick auf die laufenden Betriebskosten der zugehörigen Inertgasfeuerlöschanlage ungünstig, da grundsätzlich deutlich mehr Inertgas in den umschlossenen Raum eingeleitet werden muss, als dies tatsächlich erforderlich ist.

Auf der Grundlage dieser Problemstellung liegt der vorliegenden Erfindung nun die Aufgabe zugrunde, ein Verfahren anzugeben, mit welchem möglichst genau und ohne größeren Aufwand die Luftdichtigkeit eines umschlossenen Raumes bestimmt werden kann, wobei sich dieser Raum insbesondere für den Einsatz der vorstehend beschriebenen I-nertgasfeuerlöschtechnik eignet. Insbesondere soll ein Verfahren angegeben werden, mit welchem in einer effektiven aber dennoch leicht zu realisierenden Weise bei Bedarf jederzeit die aktuelle Luftdichtigkeit des umschlossenen Raumes bestimmt werden kann, ohne dass hierfür eine aufwendige Messreihe aufgenommen werden muss, wie es beispielsweise bei dem aus dem Stand der Technik bekannten Differenzdruck-Messprinzip der Fall ist.

Zur Lösung der vorstehend genannten Aufgabe wird erfindungsgemäß ein Verfahren zum Bestimmen der Luftdichtigkeit von umschlossenen Räumen vorgeschlagen, bei welchem zunächst ein Konzentrationsgefälle zwischen der Raumluftatmosphäre des umschlossenen Raumes und der Umgebungsluftatmosphäre eingestellt wird, und zwar indem die Stoffkonzentration von zumindest einem Bestandteil in der Raumluftatmosphäre, insbesondere von Sauerstoff, auf einen Wert eingestellt wird, der verschieden von dem entsprechenden Wert der Stoffkonzentration der zumindest einen Komponente in der Umgebungsluft ist. Anschließend wird bei dem erfindungsgemäßen Verfahren eine Konzentrationsänderungsrate bestimmt, und zwar indem in der Raumluftatmosphäre die zeitliche Änderung des Stoffkonzentrationswertes des zumindest einen Bestandteils in der Raumluftatmosphäre erfasst wird. Dies kann beispielsweise durch eine wiederholte Messung der Konzentration des zumindest einen Bestandteils in der Raumluftatmosphäre erfolgen. Schließlich wird erfindungsgemäß unter Berücksichtigung der Konzentrationsänderungsrate ein Luftdichtigkeitswert des umschlossenen Raumes berechnet.

Die erfindungsgemäße Lösung weist eine Reihe wesentlicher Vorteile gegenüber der aus dem Stand der Technik bekannten Verfahren auf. Insbesondere ist das erfindungsgemäße Verfahren ausgelegt, für den umschlossenen Raum den zugehörigen volumenbezogenen Leckagestrom bei Atmosphärendruck zu bestimmen. Demnach kann mit dem Verfahren die Luftinfiltrationsrate des umschlossenen Raumes gemessen werden, was mit dem Differenzdruckverfahren per Definition nicht möglich ist; bei dem Differenzdruckverfahren nämlich wird lediglich ein volumenbezogener Leckagestrom bei einer Bezugsdruckdifferenz ermittelt, wobei das Ergebnis dieser Messung dazu verwendet wird, die Luftinfiltration rechnerisch abzuschätzen.

Der wesentliche Vorteil der erfindungsgemäßen Lösung allerdings ist darin zu sehen, dass sich das Verfahren zum Bestimmen der Luftdichtigkeit von umschlossenen Räumen ohne größeren baulichen und finanziellen Aufwand in einem aus dem Stand der Technik bekannten und vorstehend erläuterten Inertisierungsverfahren zur Brandvermeidung und Brandlöschung integrieren lässt. Dies liegt insbesondere darin, weil beim Inertisierungsverfahren in dem umschlossenen Raum grundsätzlich ein Inertisierungsniveau eingestellt werden muss, bei welchem der Sauerstoffgehalt in der Raumluftatmosphäre einen im Vergleich zum Sauerstoffgehalt der Umgebungsatmosphäre niedrigeren Wert aufweist. Somit wird mit dem Einstellen eines Inertisierungsniveaus in der Raumluftatmosphäre des umschlossenen Raumes bereits ein Konzentrationsgefälle zwischen der Raumluftatmosphäre und der Umgebungsluftatmosphäre eingestellt. Da üblicherweise in der Inertgasfeuerlöschtechnik die Inertgaskonzentration in dem umschlossenen Raum kontinuierlich oder zu vorgebbaren Zeiten/Ereignissen gemessen wird, um zu ermitteln, ob das in der Raumluftatmosphäre eingestellte Inertisierungsniveau auf dem vorgegebenen Wert liegt, sind bei der Inertgasfeuerlöschanlage bereits die anlagentechnischen Voraussetzungen zum Bestimmen einer Konzentrationsänderungsrate in der Raumluftatmosphäre gegeben. Somit handelt es sich bei der erfindungsgemäßen Lösung um ein besonders einfach zu realisierendes Verfahren zum Bestimmen der Luftdichtigkeit von umschlossenen Räumen.

Im unmittelbaren Zusammenhang mit dem vorstehend Gesagten liegt ein weiterer Vorteil darin, dass sich das erfindungsgemäße Verfahren insbesondere auch dazu eignet, bei Bedarf und insbesondere in kurzen Zeitabständen die Luftdichtigkeit des umschlossenen Raumes zu bestimmen. Somit wäre es beispielsweise denkbar, dass die Luftdichtigkeit des umschlossenen Raumes entweder zu vorgebbaren Zeiten (wie etwa jeden Tag, jede Stunde, etc.) oder zu vorgebbaren Ereignissen (wie etwa beim Einstellen eines bestimmten Inertisierungsniveaus in der Raumluftatmosphäre des umschlossenen Raumes) bestimmt wird. Damit kann grundsätzlich die aktuelle Luftdichtigkeit des umschlossenen Raumes fortlaufend bestimmt werden. Insbesondere können somit auch beispielsweise alterungsbedingte Leckagen in der Gebäude- bzw. Raumhülle erfasst und entsprechend berücksichtigt werden. Auch eignet sich das Verfahren dazu, die gegebenenfalls durch Wind verursachte Luftdichtigkeitsänderung des Raumes zu berücksichtigen.

In vorteilhafter Weise wird erfindungsgemäß der Luftdichtigkeitswert unter Berücksichtigung der Konzentrationsänderungsrate des in der Raumluftatmosphäre vorhandenen Sauerstoffes berechnet. Selbstverständlich wäre es aber auch denkbar, den Luftdichtigkeitswert in Abhängigkeit der Konzentrationsänderungsrate des in der Raumluftatmosphäre vorhandenen Inertgases zu bestimmen. Demgemäß eignet sich das erfindungsgemäße Verfahren für eine Raumdichtigkeitsmessung in dauerinertisierten Räumen, wobei die Dichtigkeit des Raumes im Hinblick auf das im Raum enthaltene Inertgas bestimmt wird, d.h. es wird gemessen, wie groß die baulich bedingte Volumenstromrate von Inertgas aus dem umschlossenen Raum ist. Diese Volumenstromleckagerate von Inertgas beinhaltet auch den durch Inertgas-Diffusion hervorgerufene Leckagestrom aus dem umschlossenen Raum.

Vorteilhafte Weiterentwicklungen des erfindungsgemäßen Verfahrens sind in den Unteransprüchen angegeben.

So ist im Hinblick auf das Erfassen einer Konzentrationsänderungsrate in einer vorteilhaften Realisierung des erfindungsgemäßen Verfahrens vorgesehen, dass die Konzentrationsänderungsrate während einer Zeitdauer bestimmt wird, innerhalb welcher kein geregelter Luftwechsel im umschlossenen Raum stattfindet. Unter dem hierin verwendeten Begriff "geregelter Luftwechsel" ist allgemein ein Luftwechsel, d.h. ein Austausch der Raumluft mit Umgebungsluft zu verstehen, der in geregelter Weise, beispielsweise durch mechanische Lüftungsanlagen, Öffnung von Türen oder Schleusen, etc. bewerkstelligt wird. Insbesondere bei dauerinertisierbaren Räumen, bei welchen - wie es die moderne Bauweise vorsieht - die Raum- bzw. Gebäudehülle nahezu luftdicht ausgeführt ist, kann ein ungeregelter Luftwechsel nicht mehr stattfinden, so dass durch Vorsehen entsprechender Lüftungsanlagen ein geregelter Luftwechsel erforderlich ist.

Im Gegensatz zum geregelten Luftwechsel versteht man unter dem Begriff "ungeregelter Luftwechsel" ein Luftwechsel, der auf ungeregelter Weise erfolgt, indem die Raum- bzw. Gebäudehülle absichtlich oder unabsichtlich gewisse Leckagen aufweist und somit undicht ist. Der Einfluss des ungeregelten Luftwechsels auf die Luftwechselrate des Raumes ist insbesondere wetter- und windabhängig und kann mit Hilfe des erfindungsgemäßen Verfahrens bestimmt werden.

Gemäß der zuletzt genannten bevorzugten Realisierung des erfindungsgemäßen Verfahrens, bei welcher die Konzentrationsänderungsrate in der Raumluftatmosphäre des umschlossenen Raumes während einer Zeitdauer bestimmt wird, innerhalb welcher kein geregelter Luftwechsel stattfindet, wäre es ferner vorzugsweise denkbar, dass der Verfahrensschritt des Bestimmens der entsprechenden Konzentrationsänderungsrate ausgeführt wird, nachdem ein bestimmtes Konzentrationsgefälle zwischen der Raumluftatmosphäre und der Umgebungsluftatmosphäre eingestellt worden ist. Dies wäre beispielsweise dann der Fall, wenn der umschlossene Raum, dessen Luftdichtigkeit zu bestimmen ist, im Zuge des Einstellens eines bestimmten Inertisierungsniveaus durch Einleiten eines Inertgases von einer Inertgasquelle einer Inertgasfeuerlöschanlage zumindest teilweise geflutet wurde. Zeitgleich mit dem Einstellen des bestimmten Inertisierungsniveaus in der Raumluftatmosphäre des umschlossenen Raumes wird auch ein Konzentrationsgefälle zwischen der Raumluftatmosphäre und der Umgebungsluftatmosphäre eingestellt. Für das Bestimmen der Konzentrationsänderungsrate ist es gemäß der bevorzugten Weiterentwicklung nun lediglich notwendig, nur zeitweise ein Einleiten von weiterem Inertgas in die Raumluftatmosphäre des umschlossenen Raumes zu unterbinden, damit kein geregelter Luftwechsel stattfinden kann.

Alternativ zu der zuletzt genannten Realisierungsmöglichkeit des erfindungsgemäßen Verfahrens ist es allerdings auch denkbar, dass im Verlaufe des Bestimmen der Luftdichtigkeit des umschlossenen Raumes die Konzentrationsänderungsrate während einer Zeitdauer bestimmt wird, innerhalb welcher ein geregelter Luftwechsel mit bekannter Luftwechselrate stattfindet. Demnach kann auch die Konzentrationsänderungsrate zeitgleich mit dem Einstellen des Konzentrationsgefälles zwischen der Raumluftatmosphäre und der Umgebungsluftatmosphäre bestimmt werden, sofern die Luftwechselrate bekannt ist, welche zum Einstellen des Konzentrationsgefälles in die Raumluftatmosphäre des umschlossenen Raumes vorliegt.

Andererseits allerdings wäre es auch denkbar, dass die Konzentrationsänderungsrate bestimmt wird, während beispielsweise eine im umschlossenen Raum vorgesehene mechanische Lüftungsanlage einen geregelten Luftwechsel bewerkstelligt. Im weiteren Sinne bedeutet dies, dass auch eine Konzentrationsänderungsrate bestimmt werden kann, wenn beispielsweise eine im umschlossenen Raum vorgesehene Tür, welche im geschlossenen Zustand die Raumluftatmosphäre von der Umgebungsluftatmosphäre trennt, geöffnet ist und somit einen geregelten Luftwechsel ermöglicht. Voraussetzung hierfür ist allerdings, dass der Wert der mit dem geregelten Luftwechsel bewirkten Luftwechselrate bekannt ist.

Besonders bevorzugt sollte beim geregelten Luftwechsel nicht nur die Luftwechselrate sondern auch der Anteil des zumindest einen Bestandteils in der mit dem geregelten Luftwechsel dem umschlossenen Raum zugeführten Zuluft bekannt sein. Selbstverständlich kann die Luftwechselrate des geregelten Luftwechsels und/oder die chemische Zusammensetzung der mit dem Luftwechsel zugeführten Zuluft auch entsprechend abgeschätzt werden.

Im Hinblick auf das Bestimmen der Konzentrationsänderungsrate ist es bevorzugt, dass dies durch Messung einer Zeitperiode bestimmt wird, innerhalb welcher der Sauerstoffgehalt in der Raumluftatmosphäre aufgrund der in der Raumhülle vorhandenen Leckagen kontinuierlich von einem ersten vorgebbaren Sauerstoffgehalt auf einen zweiten vorgebbaren Sauerstoffgehalt ansteigt. In einer bevorzugten Realisierung ist dabei vorgesehen, dass neben der Zeitmessung auch eine Messung der Sauerstoffkonzentration im umschlossenen Raum erfolgt. Dies kann beispielsweise mit einer aspirativ arbeitenden Sauerstoffmesseinrichtung erfolgen.

Im Hinblick auf das Einstellen des Konzentrationsgefälles zwischen der Raumluftatmosphäre und der Umgebungsluftatmosphäre ist in einer ebenfalls bevorzugten Realisierung des erfindungsgemäßen Verfahrens vorgesehen, dass dies erfolgt, indem in die Raumluftatmosphäre Zuluft in geregelter Weise eingeführt wird, wobei die Stoffkonzentration des zumindest einen Bestandteils in der Zuluft verschieden von dem entsprechenden Wert der Stoffkonzentration des zumindest einen Bestandteils in der Umgebungsluftatmosphäre ist. Zusätzlich hierzu wäre es denkbar, dass die Stoffkonzentration des zumindest einen Bestandteils in der Zuluft einen vorgebbaren Wert aufweist, wobei zum Bestimmen der Luftdichtigkeit des umschlossenen Raumes die Konzentrationsänderungsrate während des Einführens der Zuluft in die Raumluftatmosphäre bestimmt wird. Selbstverständlich sind aber auch andere Ausführungsformen grundsätzlich denkbar.

Um zu erreichen, dass mit dem erfindungsgemäßen Verfahren nicht nur der Luftdichtigkeitswert des umschlossenen Raumes, sondern auch das gegenwärtige Raumluftvolumen des Raumes bestimmt werden kann, ist in einer besonders bevorzugten Weiterentwicklung des erfindungsgemäßen Verfahrens vorgesehen, dass hierzu zunächst der Anteil von zumindest einem Bestandteil, insbesondere von Sauerstoff, in der Raumluftatmosphäre des umschlossenen Raumes bestimmt wird. Dies kann beispielsweise mit einem Sauerstoffsensor, der in der Raumluftatmosphäre angeordnet ist, oder aber auch mit einem aspirativ arbeitenden System zum Bestimmen des Anteils einer bestimmten Komponente der Raumluftatmosphäre erfolgen. Nachdem in der Raumluftatmosphäre der Anteil von beispielsweise Sauerstoff ermittelt wurde, wird erfindungsgemäß in die Raumluftatmosphäre Zuluft in geregelter Weise eingeführt, wobei die Stoffkonzentration von dem zumindest einem Bestandteil der Zuluft, insbesondere von dem in der Zuluft vorhandenen Sauerstoff, verschieden von der Stoffkonzentration des zumindest einen Bestandteils (Sauerstoff) in der Raumluftatmosphäre ist, und wobei die Volumenstromrate der dem umschlossenen Raum zugeführten Zuluft sowie die Stoffkonzentration des zumindest einen Bestandteils (Sauerstoff) in der Zuluft bekannt ist. Anschließend wird erneut der Anteil des zumindest einen Bestandteils in der Raumluftatmosphäre des umschlossenen Raumes gemessen. Der Anteil des bestimmten Bestandteils in der Raumluftatmosphäre vor dem Einleiten der Zuluft in den umschlossenen Raum, der Anteil des bestimmten Bestandteils in der Raumluftatmosphäre nach dem Einleiten der Zuluft, die Volumenstromrate der dem umschlossenen Raum zugeführten Zuluft sowie die Stoffkonzentration des bestimmten Bestandteils in der dem umschlossenen Raum zugeführten Zuluft werden anschließend dazu verwendet, das Raumluftvolumen zum Zeitpunkt der Messung zu berechnen.

Da nicht nur die Raumdichtigkeit, sondern auch die Raumluftatmosphäre des umschlossenen Raums, insbesondere im Hinblick auf eine möglichst genaue Auslegung eines Inertisierungsverfahrens und insbesondere im Hinblick auf eine möglichst genaue Dimensionierung des bereitzustellenden und einzuleitenden Inertgases, wesentliche Parameter sind, wird mit der zuletzt genannten bevorzugten Weiterentwicklung des erfindungsgemäßen Verfahrens der Vorteil erzielt, dass die wesentlichen Parameter zum Auslegen der Inertgasfeuerlöschanlage zu jeder Zeit äußerst genau im Hinblick auf den mit der Inertgasfeuerlöschanlage zu schützenden Raumes bestimmt werden können.

Ein weiterer Vorteil der zuletzt genannten Ausführungsform des erfindungsgemäßen Verfahrens, welches ferner ausgelegt ist, das Raumluftvolumen des Raumes zu bestimmen, ist darin zu sehen, dass der Verfahrensschritt des Einführens von Zuluft in die Raumluftatmosphäre zeitgleich mit dem Verfahrensschritt des Einstellens eines Konzentrationsgefälles zwischen der Raumluftatmosphäre und der Umgebungsluftatmosphäre erfolgen kann. Es bedarf keiner näheren Ausführung, dass ebenso das Einführen von Zuluft in die Raumluftatmosphäre zeitgleich mit dem Einstellen eines Inertisierungsniveaus in der Raumluftatmosphäre des umschlossenen Raumes durchgeführt werden kann. Somit handelt es sich hierbei um ein Verfahren, welches sich ohne größeren Aufwand in ein bereits bestehendes Inertisierungsverfahren integrieren lässt.

Im Hinblick auf die Berechnung des Luftdichtigkeitswertes unter Berücksichtigung der Konzentrationsänderungsrate ist schließlich in vorteilhafter Weise vorgesehen, dass hierbei ein absoluter Luftdichtigkeitswert berechnet wird, und zwar indem aus der Konzentrationsänderungsrate und dem Raumluftvolumen ein volumenstrombedingter Leckagestrom berechnet und dieser in einen absoluten Luftdichtigkeitswert umgewandelt wird, d.h. in einen Luftdichtigkeitswert, der sich auf einen Nullwert bezieht, bei dem eine 100%-ige Luftdichtigkeit vorliegt. Das Umwandeln des berechneten, volumenstrombedingten Leckagestroms in den absoluten Luftdichtigkeitswert ist allerdings nicht zwingend erforderlich, da der volumenstrombedingte Leckagestrom bereits einen absoluten Luftdichtigkeitswert repräsentiert. Das bei der Berechnung des absoluten Luftdichtigkeitswertes verwendete Raumluftvolumen kann vorab mit der zuvor beschriebenen bevorzugten Weiterentwicklung des erfindungsgemäßen Verfahrens gemessen werden; selbstverständlich ist aber auch denkbar, dass bei der Berechnung dieses Raumluftvolumen als konstanten Wert angenommen wird.

Alternativ zu der zuvor beschriebenen Berechnung des absoluten Luftdichtigkeitswertes ist es allerdings auch denkbar, dass unter Berücksichtigung der Konzentrationsänderungsrate ein relativer Luftdichtigkeitswert des umschlossenen Raumes berechnet wird, und zwar indem die Konzentrationsänderungsrate mit vorgegebenen Werten, die beispielsweise in einer entsprechenden Nachschlagtabelle gespeichert sind, verglichen wird, wobei das Ergebnis des Vergleiches eine Aussage über die zeitliche Zu- und/oder Abnahme der Luftdichtigkeit des Raumes liefert. Der relative Luftdichtigkeitswert bezieht sich auf einen vom Nullwert verschiedenen Luftdichtigkeitswert, wie beispielsweise auf einen Luftdichtigkeitswert, der für den betreffenden Raum vorab gemessen wurde, oder auf einen vorab festgelegten Luftdichtigkeitswert.

Wie bereits vorstehend erwähnt, eignet sich das erfindungsgemäße Verfahren insbesondere als Ergänzung eines Inertisierungsverfahrens, wobei der mit dem erfindungsgemäßen Verfahren berechnete Luftdichtigkeitswert unmittelbar einen Einfluss auf das Inertisierungsverfahren hat, insbesondere im Hinblick auf die bereitzustellende Inertgaslöschmenge. Im einzelnen wäre es dabei denkbar, dass bei der Bestimmung der Luftdichtigkeit des umschlossenen Raumes das Konzentrationsgefälle zwischen der Raumluftatmosphäre und der Umgebungsluftatmosphäre eingestellt wird, indem der Sauerstoffgehalt im umschlossenen Raum durch Einleiten eines sauerstoffverdrängenden Gases auf ein erstes vorgebbares Inertisierungsniveau abgesenkt wird. Bei diesem ersten vorgebbaren Inertisierungsniveau kann es sich beispielsweise um ein Betriebskonzentrationsniveau oder ein Regelkonzentrationsniveau handeln. Selbstverständlich ist aber auch denkbar, dass das erste vorgebbare Inertisierungsniveau das für den umschlossenen Raum festgelegte Auslegungskonzentrationsniveau bzw. das Grenzkonzentrationsniveau ist.

Im Hinblick auf die Verwendung des erfindungsgemäßen Verfahrens in einer Inertgasfeuerlöschanlage ist des weiteren in vorteilhafter Weise vorgesehen, dass nach dem Berechnen des Luftdichtigkeitswertes für den umschlossenen Raum in der Raumluftatmosphäre des umschlossenen Raumes der Sauerstoffgehalt mit einem vorgebbaren Regelbereich auf einer unter einer Betriebskonzentration des Raumes liegenden Regelkonzentration eingestellt und gehalten wird, indem aus einer Inertgasquelle ein sauerstoffverdrängendes Gas in den Raum eingeführt wird, wobei die Regelkonzentration und die Betriebskonzentration unter Bildung eines Ausfallsicherheitsabstandes soweit unter die für den Schutzbereich festgelegte Auslegungskonzentration gesenkt werden, dass die Anstiegskurve des Sauerstoffgehalts bei Ausfall der Primärquelle eine für den Schutzbereich ermittelte Konzentration erst in einer vorgegebenen Zeit erreicht, und wobei der Ausfallsicherheitsabstand unter Berücksichtigung des für den umschlossenen Raum geltenden und zuvor ermittelten Luftdichtigkeitswertes bestimmt wird. Somit ist eine möglichst genaue Anpassung eines Inertisierungsverfahrens an den umschlossenen Raum durch geeignetes Messen des Luftdichtigkeitswertes des umschlossenen Raumes möglich. Insbesondere kann der Luftdichtigkeitswert des Raumes, der zur Auslegung des Ausfallsicherheitsabstandes herangezogen wird, kontinuierlich oder zu vorgegebenen Zeiten bzw. Ereignissen aktualisiert werden, so dass das Inertisierungsverfahren mit einem nahezu fehlerfreien Rauindichtigkeitswert ausgelegt wird.

In einer bevorzugten Weiterentwicklung des zuletzt genannten Ausführungsform ist vorgesehen, dass des weiteren in der Raumluftatmosphäre mit Hilfe eines entsprechenden Detektors eine Brandkenngröße erfasst wird, wobei der Sauerstoffgehalt im umschlossenen Raum beim Detektieren eines Entstehungsbrandes oder eines Brandes rasch auf die Regelkonzentration abgesenkt wird, wenn der Sauerstoffgehalt vorher auf einem höherem Niveau lag. Durch diese Weiterbildung des erfindungsgemäßen Verfahrens betreffend die mögliche Inertisierung des umschlossenen Raumes ist es nun möglich, das Verfahren beispielsweise auch in einem mehrstufigen Inertisierungsverfahren zu implementieren. So ist es beispielsweise denkbar, dass der umschlossene Raum anfänglich, um beispielsweise eine Begehung durch Personen zuzulassen, auf einem entsprechend höherem Inertisierungsniveau liegt. Dieses höhere Inertisierungsniveau kann entweder die Konzentration der Umgebungsluftatmosphäre (21 Vol.-% Sauerstoff) oder ein erstes bzw. Grundinertisierungsniveau von beispielsweise 17 Vol.-% Sauerstoff sein. Weiterhin ist es denkbar, dass zunächst der Sauerstoffgehalt in dem umschlossenen Raum auf ein bestimmtes Grundinertisierungsniveau von beispielsweise 17 Vol.-% abgesenkt und im Falle eines Brandes der Sauerstoffgehalt auf ein bestimmtes Vollinertisierungsniveau weiter auf die Regelkonzentration abgesenkt wird. Ein Grundinertisierungsniveau von 17 Vol.-% Sauerstoffkonzentration bedeutet keinerlei Gefährdung von Personen oder Tieren, so dass diese den Raum noch problemlos betreten können. Das Einstellen des Vollinertisierungsniveaus bzw. der Regelkonzentration kann entweder nach der Detektion eines Entstehungsbrandes eingestellt werden, denkbar wäre hier jedoch auch, dass dieses Niveau beispielsweise nachts eingestellt wird, wenn keine Personen den betreffenden Raum betreten. Bei der Regelkonzentration ist die Entflammbarkeit sämtlicher Materialien im umschlossenen Raum soweit herabgesetzt, dass sie sich nicht mehr entzünden können.

Durch das bewusste Tieferfahren der Sauerstoffkonzentration wird in vorteilhafter Weise erreicht, dass die Ausfallsicherheit des Inertisierungsverfahrens deutlich höher wird, da somit sichergestellt ist, dass selbst bei Ausfall der Inertgasquelle ein hinreichender Brandschutz vorliegt, wobei allerdings eine "Überdimensionierung" des Ausfallsicherheitsabstandes nun nicht mehr erforderlich ist, was insbesondere aus wirtschaftlicher Sicht von Vorteil ist.

In einer besonders bevorzugten Realisierung der zuletzt genannten Ausführungsformen, bei denen das erfindungsgemäße Verfahren in einer Inertgasfeuerlöschanlage verwendet wird, beträgt die Magnitude des Regelbereiches etwa 0,4 Vol.-% Sauerstoffgehalt. Ferner sollte der Regelbereich unter der Regelkonzentration liegen.

Um zu erreichen, dass die Größe bzw. die Kapazität der für das Inertisierungsverfahren erforderliche Inertgasquelle möglichst genau an den umschlossenen Raum angepasst werden kann, ist schließlich vorgesehen, dass die Berechnung der Löschmittelmenge für das Halten der Regelkonzentration im umschlossenen Raum unter Berücksichtigung des ermittelten Luftdichtigkeitswertes des umschlossenen Raumes erfolgt.

Im folgenden wird das erfindungsgemäße Verfahren anhand der Zeichnungen näher erläutert.

Es zeigen:
- Fig. 1a: einen Inertgas-Flutungsverlauf in einem umschlossenen Raum, bei welchem eine erste bevorzugte Ausführungsform des erfindungsgemäßen Verfahrens angewandt wird;
- Fig. 1b: einen zeitlichen Ausschnitt des in Fig. 1a gezeigten Inertgas-Flutungsverlaufes; und
- Fig. 2: einen Inertgas-Flutungsverlauf in einem umschlossenen Raum, bei welchem eine zweite bevorzugte Ausführungsform des erfindungsgemäßen Verfahrens angewandt wird.

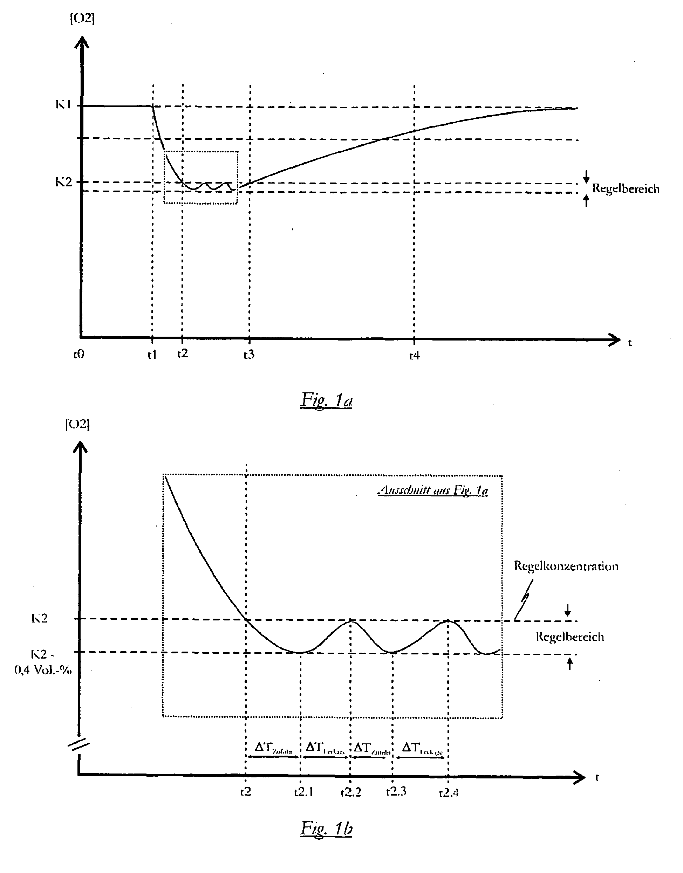

Fig. 1a zeigt schematisch einen Inertgas-Flutungsverlauf in einem umschlossenen Raum, bei welchem eine erste bevorzugte Ausführungsform des erfindungsgemäßen Verfahrens zum Bestimmen der Luftdichtigkeit des Raumes angewandt wird. Auf der Abszissenachse ist die Zeit t dargestellt, während die Ordinatenachse die Konzentration eines Bestandteiles (in vorteilhafter Weise die Konzentration von Sauerstoff) in der Raumluftatmosphäre anzeigt. In den nachfolgend beschriebenen bevorzugten Ausführungsformen ist dieser bestimmte Bestandteil der Raumluftatmosphäre der Sauerstoffanteil. Die vorliegende Erfindung ist allerdings nicht hierauf beschränkt; vielmehr wäre es auch denkbar, dass der ausgewählte Bestandteil der Raumluftatmosphäre der Inertgasanteil (Stickstoff), oder beispielsweise ein Edelgasanteil in der Raumluftatmosphäre ist.

In dem in Fig. 1a gezeigten Flutungsverlauf sind lediglich die während des Verlaufes charakteristischen Zeitereignisse angedeutet, wobei an dieser Stelle ausdrücklich darauf hingewiesen sei, dass insbesondere die Zeitachse zum Teil nicht maßstabsgerecht ist. So gilt für die Zeitperiode ΔT_{Leckage}, innerhalb welcher der Sauerstoffgehalt in der Raumluftatmosphäre aufgrund der in der Raumhülle vorhandenen Leckagen kontinuierlich ansteigt, dass diese in der Regel deutlich kleiner als die Zeitperiode ΔT_{Zufuhr} ist, innerhalb welcher die Sauerstoffkonzentration in der Raumluftatmosphäre durch Nachführen von Inertgas (z.B. mit Stickstoff angereicherter Luft) wieder herabgesetzt wird.

Wie dargestellt, ist vom Zeitpunkt t0 bis zum Zeitpunkt t1 in der Raumluftatmosphäre die Stoffkonzentration von Sauerstoff auf einen ersten konstanten Wert K1 festgelegt. Denkbar hierbei wäre beispielsweise, dass dieser erste Konzentrationswert K1 einer Sauerstoffkonzentration von 21 Vol.-% entspricht, also identisch mit der Sauerstoffkonzentration in der Umgebungsluftatmosphäre ist. Alternativ hierzu wäre es aber auch denkbar, dass der Konzentrationswert K1 einem bereits im umschlossenen Raum eingestellten Inertisierungsniveau von weniger als 21 Vol.-% Sauerstoff entspricht.

Um den Luftdichtigkeitswert des umschlossenen Raumes mit dem erfindungsgemäßen Verfahren gemäß der ersten Ausführungsform bestimmen zu können, wird in der Zeitperiode von t1 bis t2 die Sauerstoffkonzentration in der Raumluftatmosphäre von dem anfänglichen Konzentrationswert K1 auf einen zweiten Konzentrationswert K2, der unterhalb des Konzentrationswertes K1 liegt, abgesenkt. Das Absenken der Sauerstoffkonzentration in dem umschlossenen Raum erfolgt beispielsweise durch Einleiten von Inertgas (wie beispielsweise N₂, Argon, oder CO₂) in die Raumluftatmosphäre. Das Einleiten des Inertgases in die Raumluftatmosphäre und das Absenken der Sauerstoffkonzentration auf das Inertisierungsniveau K2 kann, wenn beispielsweise bei dem umschlossenen Raum die Inertgaslöschtechnik angewandt und als Präventionsmaßnahme der Sauerstoffgehalt im umschlossenen Raum mit dem Ziel abgesenkt wird, um das Risiko der Entstehung eines Brandes im Raum zu reduzieren, beispielsweise dann erfolgen, wenn der Raum nicht mehr von Personen betreten werden muss. Gleichzeitig mit dem Absenken der Sauerstoffkonzentration wird zwischen der Raumluftatmosphäre und der Umgebungsluftatmosphäre, in welcher in dem in Fig. 1a gezeigten Beispiel die Sauerstoffkonzentration den Wert K1 aufweist, ein Konzentrationsgefälle eingestellt.

In der Zeitperiode zwischen t2 und t3 wird das in der Raumluftatmosphäre eingestellte Inertisierungsniveau K2 durch geregeltes Zuführen von Inertgas und/oder Umgebungsluft (Außenluft) mit einem gegebenenfalls vorhandenen Regelbereich auf dem Wert K2 gehalten.

Zum Zeitpunkt t3 wird jedweder geregelter Luftwechsel in der Raumluftatmosphäre unterbunden, das heißt insbesondere, dass kein weiteres Inertgas und auch keine Zuluft in geregelter Weise in den umschlossenen Raum eingeführt werden. Aufgrund der im umschlossenen Raum vorhandenen Leckagen findet grundsätzlich ein ungeregelter Luftwechsel statt. Der Umfang dieses ungeregelten Luftwechsels wird mit Hilfe des erfindungsgemäßen Verfahrens ermittelt. Infolge des ungeregelten Luftwechsels wird kontinuierlich zumindest ein Teil der Raumluft, die zum Zeitpunkt t3 eine Sauerstoffkonzentration K2 aufweist, in ungeregelter Weise mit Umgebungsluft ausgetauscht, welche eine Sauerstoffkonzentration von K1 aufweist.

In dem in Fig. 1a gezeigten Flutungsverlauf spiegelt sich dieser ungeregelte Luftwechsel dadurch wieder, dass ab dem Zeitpunkt t3 die Sauerstoffkonzentration in der Raumluftatmosphäre kontinuierlich ansteigt.

Indem erfindungsgemäß die zeitliche Änderung des Sauerstoffkonzentrationswertes in der Raumluftatmosphäre mit Hilfe beispielsweise eines entsprechenden Sauerstoffsensors erfasst wird, kann eine Aussage über den im umschlossenen Raum stattfindenden ungeregelten Luftwechsel und somit eine Aussage über die Luftdichtigkeit des umschlossenen Raumes getroffen werden. In dem in Fig. 1a gezeigten Beispiel wird die Konzentrationsänderungsrate in der Zeitperiode zwischen t3 und t4 bestimmt. In vorteilhafter Weise wird in dieser Zeitperiode eine Vielzahl von Sauerstoffkonzentrationsmesswerten aufgenommen, so dass die Steigung des Sauerstoffkonzentrationsverlaufes in dem Messfenster zwischen den Zeitpunkten t3 und t4 möglichst genau ermittelt werden kann. Die Steigung des Sauerstoffkonzentrationsverlaufes, d.h. die zeitliche Ableitung des Sauerstoffkonzentrationsverlaufes entspricht dabei der zu ermittelnden Konzentrationsänderungsrate in der Raumluftatmosphäre.

Nachdem die Konzentrationsänderungsrate bestimmt wurde, steigt, wie es in Fig. 1a dargestellt ist, der Sauerstoffkonzentrationswert weiter kontinuierlich an, bis er wieder den Konzentrationswert K1 erreicht, welcher identisch mit dem Sauerstoffkonzentrationswert in der Umgebungsluftatmosphäre ist. Selbstverständlich wäre es aber auch denkbar, dass nach Abschluss der Ermittlung der Konzentrationsänderungsrate zum Zeitpunkt t4 die Sauerstoffkonzentration in der Raumluftatmosphäre erneut auf das Inertisierungsniveau K2 (oder ein anderes vorgebbares Niveau) eingestellt wird, was beispielsweise erforderlich ist, wenn aus Gründen der Brandvermeidung der umschlossenen Raum dauerinertisiert werden soll.

Das unter Bezugnahme auf den in Fig. 1a dargestellten Inertgas-Flutungsverlauf beschriebene Verfahren zum Bestimmen der Luftdichtigkeit des umschlossenen Raumes eignet sich ebenfalls dazu, zeitgleich mit der Bestimmung der Luftdichtigkeit das Raumluftvolumen des umschlossenen Raumes zu ermittelt. Hierzu ist es lediglich erforderlich, dass während der Zeitperiode zwischen t1 und t2, innerhalb welcher die Sauerstoffkonzentration in der Raumluftatmosphäre von dem ersten Niveau K1 auf das zweite Niveau K2 abgesenkt wird, um somit ein Konzentrationsgefälle zwischen der Raumluftatmosphäre und der Umgebungsluftatmosphäre einzustellen, die Volumenstromrate des dem umschlossenen Raum zugeführten Inertgases (beispielsweise Stickstoff) und die Sauerstoffkonzentration in dem eingeleiteten Inertgas bekannt ist. Hierzu bietet sich an, in der Inertgas-Zufuhrleitung einen entsprechenden Volumenstromsensor anzuordnen, um die Inertgas-Volumenstromrate zu messen, mit welcher im Zeitraum zwischen t1 und t2 das Inertgas dem umschlossenen Raum zugeführt wird. Selbstverständlich wäre es aber auch denkbar, eine Inertgasquelle, mit welcher das Inertgas zum Einstellen des Konzentrationsgefälles zwischen der Raumluftatmosphäre und der Umgebungsluftatmosphäre bereitgestellt wird, entsprechend angesteuert wird, dass diese eine bestimmte vorgebbare Inertgas-Volumenstromrate abgibt.

Im Hinblick auf die Sauerstoffkonzentration in dem Inertgas, welches in der Zeitperiode zwischen t1 und t2 in die Raumluftatmosphäre eingeleitet wird, kann auf ähnliche Weise ein entsprechender Sauerstoff- bzw. Inertgassensor in der Inertgas-Zufuhrleitung vorgesehen sein. Selbstverständlich ist aber auch denkbar, dass die Inertgasquelle von sich aus bereits Inertgas mit einer bekannten Sauerstoffkonzentration bereitstellt. In diesem Fall kann auf eine entsprechende Sensoranordnung beispielsweise in der Inertgas-Zufuhrleitung verzichtet werden.

Um nun das Raumluftvolumen des umschlossenen Raumes anhand des in Fig. 1a dargestellten Inertgas-Flutungsverlaufes bestimmen zu können, ist es erforderlich, dass zunächst der Sauerstoffanteil in der Raumluftatmosphäre des umschlossenen Raumes bestimmt wird. Die erfolgt in vorteilhafter Weise zum Zeitpunkt t1, obwohl es selbstverständlich auch denkbar wäre, dass der Sauerstoffanteil in der Raumluftatmosphäre zu einem späteren Zeitpunkt als zum Zeitpunkt t1 bestimmt wird. Dieser spätere Zeitpunkt sollte allerdings vor dem Zeitpunkt t2 liegen, zu welchem die Sauerstoffkonzentration in der Raumluftatmosphäre (mit Ausnahme eines gewissen Regelbereiches) auf dem Inertisierungsniveau K2 eingestellt ist.

Nachdem eine bekannte Menge an Inertgas in die Raumluftatmosphäre eingeleitet wurde, wird erneut der Sauerstoffanteil in der gesamten Raumluftatmosphäre des umschlossenen Raumes bestimmt. Da es hierbei erforderlich ist, den mittleren Sauerstoffanteil in der Raumluftatmosphäre zu erfassen, bietet sich als anlagentechnische Umsetzung zum Bestimmen des Sauerstoffanteiles in der Raumluftatmosphäre insbesondere ein aspirativ arbeitendes Sauerstoffmesssystem an, mit welchem eine repräsentative Luftprobe aus der Raumluftatmosphäre angesaugt und einem Sauerstoffsensor zugeführt wird. Andererseits wäre es aber auch denkbar, an verschiedenen Stellen innerhalb des Raumes entsprechende Sensoren vorzusehen, wobei die jeweiligen Sensorsignale anschließend gemittelt werden, um somit eine möglichst genaue Aussage über den mittleren Sauerstoffanteil in der Raumluftatmosphäre zu erfassen.

Wie bereits angedeutet, erfolgt das erneute Bestimmen des Sauerstoffanteils in der Raumluftatmosphäre, nachdem das Inertgas in geregelter Weise in den umschlossenen Raum eingeführt wurde. Hierfür bietet sich der Zeitpunkt t2 an, da dieser Zeitpunkt t2 relativ nahe am Zeitpunkt t1, d.h. am Zeitpunkt der ersten Messung des Sauerstoffanteils in der Raumluftatmosphäre liegt, so dass das Messergebnis möglichst wenig durch den ungeregelten Luftwechsel des umschlossenen Raumes beeinflusst wird.

Schließlich kann in einer geeigneten Steuerung, mit welcher auch das Verfahren zum Bestimmen der Luftdichtigkeit des umschlossenen Raumes gesteuert und insbesondere der Luftdichtigkeitswert unter Berücksichtigung der erfassten Konzentrationsänderungsrate berechnet wird, das Raumluftvolumen berechnet werden, und zwar unter Berücksichtigung des zum Zeitpunkt t1 ermittelten Sauerstoffanteils in der Raumluftatmosphäre, unter Berücksichtigung des zum Zeitpunkt t2 ermittelten Sauerstoffanteils in der Raumluftatmosphäre sowie unter Berücksichtigung der in der Zeitperiode zwischen t1 und t2 in die Raumluftatmosphäre eingebrachten Inertgasmenge bzw. Sauerstoffmenge.

Demnach ist es anhand des beispielhaft in Fig. 1a dargestellten Inertgas-Flutungsverlaufes möglich, sowohl die Luftdichtigkeit als auch das Raumluftvolumen des umschlossenen Raumes zu bestimmen. Beide Verfahren können insbesondere zeitgleich ausgeführt werden. Da zur Realisierung der beschriebenen Verfahren ein Inertgas-Flutungsverlauf in einem umschlossenen Raum geeignet ist, kann bei einem Inertisierungsverfahren, bei welchem die Sauerstoffkonzentration in einem zu schützenden Raum im Vergleich zur Sauerstoffkonzentration der Umgebungsluft auf ein reduziertes Inertisierungsniveau abgesenkt wird, der notwendige Inertgas-Flutungsverlauf in der Raumluftatmosphäre bereitsgestellt werden.

Selbstverständlich ist die vorliegende Erfindung allerdings nicht auf die Inertgas- bzw. Sauerstoffkonzentration der Raumluftatmosphäre beschränkt. Vielmehr eignet sich das Verfahren mit jedwedem (gasförmigen) Bestandteil in der Raumluftatmosphäre.

In Fig. 1b ist das in Fig. 1a mit einer punktierten Linie angedeutete Fenster in einer vergrößerten schematischen Darstellung gezeigt. Insbesondere ist hier der zeitliche Ausschnitt des in Fig. 1a dargestellten Flutungsverlaufes aufgetragen, in welchem die Sauerstoffkonzentration im umschlossenen Raum zum Zeitpunkt t2 den Konzentrationswert K2 erreicht. Wie dargestellt, wird nach Erreichen des Konzentrationswertes K2 der Sauerstoffgehalt im umschlossenen Raum mit einem Regelbereich von 0,4 Vol.-% Sauerstoff unter dem Konzentrationsniveau K2 gehalten. Dies erfolgt vorzugsweise, indem in der Raumluftatmosphäre kontinuierlich bzw. in regelmäßigen Zeitabständen der Sauerstoffgehalt bestimmt und bei Bedarf Inertgas in geregelter Weise nachgeführt wird. Im einzelnen ist dabei vorgesehen, dass nach Erreichen des Konzentrationsniveaus K2 der Sauerstoffgehalt durch weiteres Einführen von Inertgas auf die untere Grenze des Regelbereiches (K2 - 0,4 Vol.-% Sauerstoff) weiter abgesenkt wird.

Wie in Fig. 1b gezeigt, erreicht der Flutungsverlauf die untere Grenze des Regelbereiches zum Zeitpunkt t2.1. Anschließend wird für die Dauer der Zeitperiode ΔT_{Leckage} die Inertgaszufuhr in den umschlossenen Raum angehalten, so dass für diese Zeitperiode kein geregelter Luftwechsel vorliegt. Innerhalb der Zeitperiode ΔT_{Leckage} steigt der Sauerstoffgehalt in der Raumluftatmosphäre aufgrund der in der Raumhülle vorhandenen Leckagen kontinuierlich an, bis er schließlich zum Zeitpunkt t2.2 die obere Grenze des Regelbereiches erreicht. In der in Fig. 1b gezeigten Ausführungsform ist die obere Grenze des Regelbereiches identisch mit dem Konzentrationsniveau K2; denkbar wäre allerdings auch, dass die obere Grenze des Regelbereiches unterhalb oder oberhalb von K2 liegt.

Zum Zeitpunkt t2.2 wird erneut Inertgas in den umschlossenen Raum eingeführt, und zwar so lange, bis die Sauerstoffkonzentration in der Raumluftatmosphäre wieder die untere Grenze des Regelbereiches zum Zeitpunkt t2.3 erreicht.

Da bei dem in Fig. 1b dargestellten Flutungsverlaufausschnitt in der Zeitperiode ΔT_{Zufuhr} zwischen den Zeitpunkten t2 und t2.1 (bzw. t2.2 und t2.3 etc.) ein Konzentrationsgefälle zwischen der Raumluftatmosphäre des umschlossenen Raumes und der Umgebungsluftatmosphäre eingestellt und in der Zeitperiode ΔT_{Leckage} zwischen den Zeitpunkten t2.1 und t2.2 (bzw. t2.3 und t2.4 etc.) eine Konzentrationsänderungsrate bestimmt werden kann, eignet sich das erfindungsgemäße Verfahren auch für eine Raumdichtigkeitsbestimmung, wenn in dem umschlossenen Raum eine bestimmtes Inertisierungsniveau eingestellt und dort mit einem gewissen Regelbereich gehalten wird. Insbesondere ist es hierzu lediglich erforderlich, dass zum einen die Zeitperiode ΔT_{Leckage}, innerhalb welcher die Inertgaszufuhr in den umschlossenen Raum angehalten ist, gemessen wird, und zum anderen die Magnitude des Regelbereiches bekannt ist. Bei der in Fig. 1b gezeigten Ausführungsform beträgt die Magnitude des Regelbereiches 0,4 Vol.-% Sauerstoff; dies ist zum Halten der Sauerstoffkonzentration auf einem bestimmten Inertisierungsniveau bei Inertgasfeuerlöschanlagen ein bevorzugter Wert. Allerdings ist die Erfindung nicht auf diesen Wert beschränkt.

Besonders bevorzugt wird in der Zeit, innerhalb welcher die Sauerstoffkonzentration der Raumluftatmosphäre mit einem bestimmten Regelbereich auf einem Inertisierungsniveau gehalten wird, d.h. beispielsweise in der Zeitperiode zwischen den Zeitpunkten t2 und t3 (vgl. Fig. 1a), eine Vielzahl von Raumdichtigkeitsmessungen durchgeführt, um somit durch Mittelwertbildung etc. letztendlich einen möglichst genauen Wert der Raumdichtigkeit bestimmen zu können.

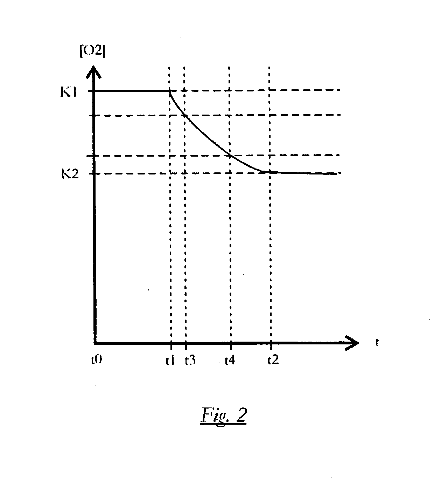

Fig. 2 zeigt einen Inertgas-Flutungsverlauf in einem umschlossenen Raum, bei welchem eine zweite bevorzugte Ausführungsform des erfindungsgemäßen Verfahrens zum Bestimmen der Luftdichtigkeit des Raumes angewandt wird. Ähnlich wie bei der in Fig. 1 dargestellten Ausführungsform ist die Sauerstoffkonzentration in der Raumluftatmosphäre in der Zeitperiode zwischen t0 und t1 auf einem ersten Konzentrationswert K1 eingestellt. Zum Zeitpunkt t2 wird durch Einleiten von Inertgas in den umschlossenen Raum die Sauerstoffkonzentration abgesenkt, bis sie zum Zeitpunkt t2 den Konzentrationswert K2 erreicht.

Im Unterschied zu der im Zusammenhang mit Fig. 1 beschriebenen ersten Ausführungsform des erfindungsgemäßen Verfahrens ist bei der zweiten Ausführungsform gemäß Fig. 2 vorgesehen, dass die Luftdichtigkeit des umschlossenen Raumes in der Zeitperiode zwischen t1 und t2 bestimmt wird, das heißt, in einer Zeitperiode, innerhalb welcher aufgrund des Einleitens von Inertgas ein geregelter Luftwechsel stattfindet. Hierzu ist es erforderlich, die Luftwechselrate des geregelten Luftwechsels zu kennen. Anders ausgedrückt bedeutet dies, dass die Inertgas-Volumenstromrate des dem umschlossenen Raum zugeführten Inertgases bekannt sein muss. Wie bereits im Zusammenhang mit dem Bestimmen des Raumluftvolumens angedeutet, kommt hierfür beispielsweise ein entsprechender Volumenstromsensor im Inertgas-Zuleitungssystem in Frage.

Bei dem im Zusammenhang mit dem in Fig. 2 gezeigten Flutungsverlauf beschriebenen Verfahren werden jeweils zu den Zeitpunkten t3 und t4, die in dem Zeitfenster zwischen t1 und t2 liegen, die Sauerstoffkonzentration in der Raumluftatmosphäre bestimmt. Da allerdings eine Konzentrationsänderungsrate, die nur auf Basis dieser Messwerte ermittelt wird, sowohl die durch das Einleiten des Inertgases bewirkte geregelte Luftwechselrate, als auch die durch Leckagen in der Gebäude- bzw. Raumhülle hervorgerufene ungeregelte Luftwechselrate wiederspiegelt, ist es erforderlich, den Anteil der geregelten Luftwechselrate zu kennen, um somit die durch den ungeregelten Luftwechsel hervorgerufene Konzentrationsänderungsrate bestimmen zu können. Wie zuvor dargelegt, ist allerdings die dem umschlossenen Raum zugeführte Inertgas-Volumenstromrate bekannt, so dass auf einfache Weise die durch den ungeregelten Luftwechsel bewirkte Konzentrationsänderungsrate ermittelt und somit der Luftdichtigkeitswert des Raumes unter Berücksichtigung dieser Konzentrationsänderungsrate bestimmt werden kann.

## Patentansprüche

1. Verfahren zum Bestimmen der Luftdichtigkeit von umschlossenen Räumen, mit den folgenden Verfahrensschritten:
a) Einstellen eines Konzentrationsgefälles zwischen der Raumluftatmosphäre eines umschlossenen Raumes und der Umgebungsluftatmosphäre, indem die Stoffkonzentration von zumindest einem Bestandteil der Raumluftatmosphäre, insbesondere von Sauerstoff, auf einen Wert eingestellt wird, der verschieden von dem entsprechenden Wert der Stoffkonzentration des zumindest einen Bestandteils in der Umgebungsluftatmosphäre ist;
b) Bestimmen einer Konzentrationsänderungsrate, indem in der Raumluftatmosphäre die zeitliche Änderung der Stoffkonzentration des zumindest einen Bestandteils erfasst wird; und
c) Berechnen eines Luftdichtigkeitswertes des umschlossenen Raumes unter Berücksichtigung der ermittelten Konzentrationsänderungsrate.

2. Verfahren nach Anspruch 1, wobei im Verfahrensschritt b) die Konzentrationsänderungsrate während einer Zeitdauer bestimmt wird, innerhalb welcher im umschlossenen Raum kein geregelter Luftwechsel stattfindet.

3. Verfahren nach Anspruch 1, wobei im Verfahrensschritt b) die Konzentrationsänderungstate während einer Zeitdauer bestimmt wird, innerhalb welcher im mnschlossenen Raum ein geregelter Luftwechsel mit bekannter Luftwechselrate stattfindet, wobei im Verfahrensschritt c) der Luftdichtigkeitswert des umschlossenen Raumes unter Berücksichtigung der Konzentrationsänderungsrate und der Luftwechselrate des geregelten Luftwechsels berechnet wird.

4. Verfahren nach einem der vorhergehenden Ansprüche, wobei die Konzentrationsänderungsrate durch Messung einer Zeitperiode (ΔT_{LecKage}) bestimmt wird, innerhalb welcher der Sauerstoffgehalt in der Raumluftatmosphäre aufgrund der in der Raumhülle vorhandenen Leckagen kontinuierlich von einem ersten vorgebbaren Sauerstoffgehalt auf einen zweiten vorgebbaren Sauerstoffgehalt ansteigt.

5. Verfahren nach einem der vorhergehenden Ansprüche, wobei im Verfahrensschritt a) im umschlossenen Raum das Konzentrationsgefälle zwischen der Raumluftatmosphäre und der Umgebungsluftatmosphäre eingestellt wird, indem in geregelter Weise Zuluft in die Raumluftatmosphäre eingeführt wird, wobei die Stoffkonzentration des zumindest einen Bestandteils in der der Raumluftatmosphäre des umschlossenen Raumes zugeführten Zuluft verschieden von dem entsprechenden Wert der Stoffkonzentration des zumindest einen Bestandteil in der Umgebungsluftatmosphäre ist.

6. Verfahren nach Anspruch 5, wobei die Stoffkonzentration des zumindest einen Bestandteils in der der Raumluftatmosphäre des umschlossenen Raumes zugeführten Zuluft einen vorgebbaren Wert aufweist, und wobei im Verfahrensschritt b) die Konzentrationsänderungsrate während des Einführens der Zuluft in die Raumluftatmosphäre bestimmt wird.

7. Verfahren nach einem der vorhergehen Ansprüche, welches ferner ausgelegt ist, das Raumluftvolumen des umschlossenen Raumes zu bestimmen, wobei das Verfahren hierzu die folgenden Verfahrensschritte aufweist:
d) Bestimmen des Anteils von zumindest einem Bestandteil, insbesondere des Sauerstoffanteils, in der Raumluftatmosphäre des umschlossenen Raumes;
e) Einführen von Zuluft in die Raumluftatmosphäre des umschlossenen Raumes in einer geregelten Weise, wobei in der Zuluft die Stoffkonzentration von dem zumindest einen Bestandteil verschieden von der Stoffkonzentration des zumindest einen Bestandteils in der Raumluftatmosphäre ist, und wobei die Volumenstromrate der in die Raumluftatmosphäre des umschlossenen Raumes eingeführten Zuluft und die Stoffkonzentration des zumindest einen Bestandteils in der in die Raumluftatmosphärc des umschlossenen Raumes eingeführten Zuluft bekannt sind;
f) erneutes Bestimmen des Anteils des zumindest einen Bestandteiles in der Raumluftatmosphäre des umschlossenen Raumes; und
g) Berechnen des Raumluftvolumens unter Berücksichtigung der in den Verfahrensschritten d) und f) ermittelten Anteile des Bestandteils in der Raumluftatmosphäre und unter Berücksichtigung der Volumenstromrate der im Verfahrensschritt e) in die Raumluftatmosphäre eingeführten Zuluft sowie unter Berücksichtigung der Stoffkonzentration des zumindest einen Bestandteils in der in die Raumluftatmosphäre eingeführten Zuluft.

8. Verfahren nach Anspruch 7 wobei die Verfahrensschritte e) und a) zeitgleich ausgeführt werden.

9. Verfahren nach einem der vorhergehenden Ansprüche, insbesondere nach Anspruch 7 oder 8, wobei im Verfahrensschritt c) ein absoluter Luftdichtigkeitswert berechnet wird, indem aus der Konzentrationsänderungsrate und dem Raumluftvolumen ein volumenstrombedingter Leckagestrom berechnet und dieser in einen absoluten Luftdichtigkeitswert umgewandelt wird.

10. Verfahren nach einem der Ansprüche 1 bis 8, wobei im Verfahrensschritt c) ein relativer Luftdichtigkeitswert berechnet wird, indem die Konzentrationsänderungsrate mit vorgegebenen Werten verglichen wird, wobei das Ergebnis des Vergleiches eine Aussage über die zeitliche Zu- und/oder Abnahme der Luftdichtigkeit des umschlossenen Raumes liefert.

11. Verfahren nach einem der vorgehenden Ansprüche, wobei im Verfahrens a) das Konzentrationsgefälle zwischen der Raumluftatmosphäre und der Umgebungsluftatmosphäre im umschlossenen Raum eingestellt wird, indem der Sauerstoffgehalt im umschlossenen Raum durch Einleiten eines sauerstoffverdrängenden Gases auf ein erstes vorgebbares Inertisierungsniveau abgesenkt wird.

12. Verfahren nach einem der vorgehenden Ansprüche, insbesondere nach Anspruch 10, welches ferner den folgenden Verfahrensschritt nach Verfahrensschritt c) aufweist:
c1) Einstellen und Halten des Saucrstoffgelialtes in der Raumluftatmosphäre mit einem vorgebbaren Regelbereich auf einer unter einer Betricbskonzentration des umschlossenen Raumes liegenden Regelkonzentration, indem aus einer Inertgasquelle ein sauerstoffverdrängendes Gas in den umschlossenen Raum eingeleitet wird,
wobei die Regelkonzentration und die Betriebskonzentration unter Bildung eines Ausfallsicherheitsabstandes soweit unter die für den umschlossenen Raum festgelegte Auslegungskonzentration gesenkt werden, dass die Anstiegskurve des Sauerstoffgehaltes bei Ausfall der Inertgasquelle eine für den umschlossenen Raum ermittelnde Grenzkonzentration erst in einer vorgegebenen Zeit erreicht, und wobei der Ausfallsicherheitsabstand unter Berücksichtigung des für den umschlossenen Raum bestimmten Luftdichtigkeitswertes ermittelt wird.

13. Verfahren nach Anspruch 12, welches ferner den folgenden Verfahrensschritt nach Verfahrensschritt c1) aufweist:
c2) Überwachen der Raumluftatmosphäre im Hinblick auf eine Brandkenngröße mit einem Detektor zum Erkennen einer Brandkenngröße,
wobei der Sauerstoffgehalt im umschlossenen Raum beim Detektieren eines Entstehungsbrandes oder eines Brandes rasch auf die Regelkonzentration abgesenkt wird, wenn der Sauerstoffgehalt vorher auf einem höheren Niveau lag.

14. Verfahren nach Anspruch 12 oder 13, wobei die Magnitude des Regelbereiches etwa 0,4 Vo1.-% Sauerstoffgehalt beträgt und unter der Regelkonzentration liegt.

15. Verfahren nach einem der Ansprüche 12 bis 14, welches ferner den Verfahrensschritt des Berechnens einer Löschmittelmenge für das Halten der Regelkonzentration im umschlossenen Raum unter Berücksichtigung der ermittelten Luftdichtigkeit des umschlossenen Raumes aufweist.

## Claims

1. Method for determining the airtightness of enclosed rooms, with the following method steps:
a) establishing a concentration drop between the room air atmosphere of an enclosed room and the environmental air atmosphere by the substance concentration of at least one constituent of the room air atmosphere, especially of oxygen, being established at a value which is different from the corresponding value of the substance concentration of the at least one constituent in the environmental air atmosphere;
b) determining a concentration change rate by the time change of the substance concentration of the at least one constituent in the room air atmosphere being detected; and
c) calculating an airtightness value of the enclosed room with consideration for the determined concentration change rate.

2. Method according to Claim 1, wherein in the method step b) the concentration change rate is determined during a period within which a controlled air change does not take place in the enclosed room.

3. Method according to Claim 1, wherein in the method step b) the concentration change rate is determined during a period within which a controlled air change with known air change rate takes place in the enclosed room, wherein in the method step c) the airtightness value of the enclosed room is calculated with consideration for the concentration change rate and for the air change rate of the controlled air change.

4. Method according to one of the preceding claims, wherein the concentration change rate is determined by measuring a time period (ΔT_{Leakage}) within which the oxygen content in the room air atmosphere increases continuously from a first predeterminable oxygen content to a second predeterminable oxygen content on account of the leakages which exist in the room shell.

5. Method according to one of the preceding claims, wherein in the method step a) the concentration drop between the room air atmosphere and the environmental air atmosphere is established in the enclosed room by feed air being introduced into the room air atmosphere in a controlled manner, wherein the substance concentration of the at least one constituent in the feed air which is fed to the room air atmosphere of the enclosed room is different from the corresponding value of the substance concentration of the at least one constituent in the environmental air atmosphere.

6. Method according to Claim 5, wherein the substance concentration of the at least one constituent in the feed air which is fed to the room air atmosphere of the enclosed room has a predeterminable value, and wherein in the method step b) the concentration change rate is determined while introducing the feed air into the room air atmosphere.

7. Method according to one of the preceding claims, which in addition is designed to determine the room air volume of the enclosed room, wherein for this purpose the method has the following method steps:
d) determining the portion of at least one constituent, especially of the oxygen portion, in the room air atmosphere of the enclosed room;
e) introducing feed air into the room air atmosphere of the enclosed room in a controlled manner, wherein in the feed air the substance concentration of the at least one constituent is different from the substance concentration of the at least one constituent in the room air atmosphere, and wherein the volumetric flow rate of the feed air which is introduced into the room air atmosphere of the enclosed room, and the substance concentration of the at least one constituent in the feed air which is introduced into the room air atmosphere of the enclosed room are known.
f) redetermining the portion of the at least one constituent in the room air atmosphere of the enclosed room; and
g) calculating the room air volume with consideration for the portions of the constituent in the room air atmosphere which are determined in the method steps d) and f), and with consideration for the volumetric flow rate of the feed air which is introduced into the room air atmosphere in the method step e), and also with consideration for the substance concentration of the at least one constituent in the feed air which is introduced into the room air atmosphere.

8. Method according to Claim 7, wherein the method steps e) and a) are carried out at the same time.

9. Method according to one of the preceding claims, especially according to either of Claims 7 or 8, wherein in the method step c) an absolute airtightness is calculated by a volumetric flow-dependent leakage flow being calculated from the concentration change rate and from the room air volume, and by this absolute airtightness being converted into an absolute airtightness value.

10. Method according to one of Claims 1 to 8, wherein in the method step c) a relative airtightness value is calculated by the concentration change rate being compared with predetermined values, wherein the result of the comparison draws a conclusion concerning the time increase and/or decrease of the airtightness of the enclosed room.

11. Method according to one of the preceding claims, wherein in the method a) the concentration drop between the room air atmosphere and the environmental air atmosphere in the enclosed room is established by the oxygen content in the enclosed room being lowered to a first predeterminable inertization level by introducing an oxygen-displacing gas.

12. Method according to one of the preceding claims, especially according to Claim 10, which in addition has the following method step according to method step c):
c1) establishing and holding the oxygen content in the room air atmosphere with a predeterminable control range at a control concentration which lies below an operating concentration of the enclosed room by an oxygen-displacing gas being introduced into the enclosed room from an inert gas source,
wherein the control concentration and the operating concentration, forming a failsafe margin, is lowered below the design concentration which is established for the enclosed room to the extent that the increase curve of the oxygen content in the case of failure of the inert gas source reaches a limiting concentration, which is determined for the enclosed room, only within a predetermined time, and wherein the failsafe margin is determined with consideration for the airtightness value which is determined for the enclosed room.

13. Method according to Claim 12, which in addition has the following method step according to method step c1) :
c2) monitoring the room air atmosphere with regard to a fire characteristic with a detector for detecting a fire characteristic,
wherein upon detecting a nascent fire, or a fire, the oxygen content in the enclosed room is quickly lowered to the control concentration if the oxygen content was previously at a higher level.

14. Method according to either of Claims 12 or 13, wherein the magnitude of the control range is about 0.4% by volume of oxygen content and lies below the control concentration.

15. Method according to one of Claims 12 to 14, which in addition has the method step of calculating a volume of extinguishant for holding the control concentration in the enclosed room with consideration for the determined airtightness of the enclosed room.

## Revendications

1. Procédé pour déterminer l'étanchéité à l'air d'espaces confinés, comportant les étapes de procédé suivantes :
a) réglage d'un gradient de concentration entre l'atmosphère d'air local d'un espace confiné et l'atmosphère de l'air ambiant, en réglant la concentration de matière d'au moins un composant de l'atmosphère de l'air local, en particulier d'oxygène, à une valeur qui est différente de la valeur correspondante de la concentration de matière dudit au moins un composant dans l'atmosphère de l'air ambiant ;
b) détermination d'un taux de modification de concentration en détectant dans l'atmosphère d'air local la modification temporelle de la concentration de matière dudit au moins un composant ; et
c) calcul d'une valeur d'étanchéité à l'air de l'espace confiné en tenant compte des taux de modification de concentration constatés.

2. Procédé selon la revendication 1, dans lequel dans l'étape de procédé b), le taux de modification de concentration est déterminé pendant une durée de temps pendant laquelle aucun changement d'air régulé n'a lieu dans l'espace confiné.

3. Procédé selon la revendication 1, dans lequel dans l'étape de procédé b), le taux de modification de concentration est déterminé pendant une durée de temps pendant laquelle un changement d'air régulé a lieu dans l'espace confiné avec un taux de changement d'air connu, et dans l'étape de procédé c), la valeur d'étanchéité à l'air de l'espace confiné est calculée en tenant compte du taux de modification de concentration et du taux de changement d'air du changement d'air régulé.

4. Procédé selon l'une quelconque des revendications précédentes, dans lequel le taux de modification de concentration est déterminé en mesurant une période de temps (ΔT_{fuite}), pendant laquelle la teneur en oxygène dans l'atmosphère d'air local monte, en raison de fuites se trouvant dans l'enveloppe d'espace, de manière continue depuis une première teneur en oxygène prédéterminable à une deuxième teneur en oxygène prédéterminable.

5. Procédé selon l'une quelconque des revendications précédentes, dans lequel dans l'étape de procédé a), le gradient de concentration dans l'espace confiné est réglé entre l'atmosphère d'air local et l'atmosphère d'air ambiant, en introduisant de manière régulée de l'air frais dans l'atmosphère d'air local, la concentration de matière dudit au moins un composant dans l'air frais amené à l'atmosphère d'air local de l'espace confiné est différente de la valeur correspondante de la concentration de matière dudit au moins un composant dans l'atmosphère d'air ambiant.

6. Procédé selon la revendication 5, dans lequel la concentration de matière dudit au moins un composant dans l'atmosphère d'air local de l'espace confiné présente une valeur prédéterminable, et dans lequel dans l'étape de procédé b), le taux de modification de concentration est déterminé pendant l'introduction d'air frais dans l'atmosphère d'air local.

7. Procédé selon l'une quelconque des revendications précédentes, qui est en outre prévu pour déterminer le volume d'air local de l'espace confiné, le procédé présentant à cet effet les étapes de procédé suivantes :
d) détermination de la part d'au moins un composant, en particulier de la part d'oxygène, dans l'atmosphère d'air local de l'espace confiné ;
e) introduction d'air frais dans l'atmosphère d'air local de l'espace confiné d'une manière régulée, la concentration de matière dudit au moins un composant dans l'air frais étant différente de la concentration de matière dudit au moins un composant dans l'atmosphère d'air local, et le taux de débit volumétrique de l'air frais introduit dans l'atmosphère d'air local de l'espace confiné et la concentration de matière dudit au moins un composant dans l'air frais introduit dans l'atmosphère d'air local de l'espace confiné étant connus ;
f) nouvelle détermination de la part dudit au moins un composant dans l'atmosphère d'air local de l'espace confiné ; et
g) calcul du volume d'air local en tenant compte des parts du composant dans l'atmosphère d'air local, constatées dans les étapes de procédé d) et f) et en tenant compte des taux de débit volumétrique de l'air frais introduit dans l'atmosphère d'air local à l'étape de procédé c) ainsi qu'en tenant compte de la concentration de matière dudit au moins un composant dans l'air frais introduit dans l'atmosphère d'air local.

8. Procédé selon la revendication 7, dans lequel les étapes de procédé e) et a) sont réalisées en même temps.

9. Procédé selon l'une quelconque des revendications précédentes, en particulier selon la revendication 7 ou 8, dans lequel on calcule à l'étape c) une valeur d'étanchéité à l'air absolue en calculant à partir du taux de modification de concentration et du volume d'air local un courant de fuite dû au débit volumétrique et en transformant celui-ci en une valeur d'étanchéité à l'air absolue.

10. Procédé selon l'une des revendications 1 à 8, dans lequel à l'étape de procédé c), on calcule une valeur d'étanchéité d'air relative en comparant le taux de modification de concentration aux valeurs prédéterminées, le résultat de la comparaison fournissant une information sur l'augmentation et/ou la diminution temporelle de l'étanchéité à l'air de l'espace confiné.

11. Procédé selon l'une quelconque des revendications précédentes, dans lequel dans l'étape de procédé a), le gradient de concentration est réglé entre l'atmosphère d'air local et l'atmosphère d'air ambiant en abaissant la teneur en oxygène dans l'espace confiné en injectant un gaz refoulant l'oxygène à un premier niveau d'inertisation prédéterminable.

12. Procédé selon l'une quelconque des revendications précédentes, en particulier selon la revendication 10, qui présente en outre l'étape de procédé suivante après l'étape de procédé c) :
c1) réglage et maintien de la teneur en oxygène dans l'atmosphère d'air local avec une plage de réglage prédéterminable à une concentration de réglage se trouvant en dessous d'une concentration de service de l'espace confiné, en injectant dans l'espace confiné un gaz refoulant l'oxygène à partir d'une source de gaz inerte,
dans lequel la concentration de réglage et la concentration de service sont abaissées en formant un écart de sécurité de défaillance aussi loin au-dessous de la concentration prévue constatée pour l'espace confiné que la courbe de montée de la teneur en oxygène en cas de défaillance de la source de gaz inerte atteint seulement dans un temps prédéterminé une concentration limite déterminante pour l'espace confiné, et dans lequel l'écart de sécurité de défaillance est établi en tenant compte de la valeur d'étanchéité à l'air déterminée.

13. Procédé selon la revendication 12, qui présente en outre l'étape de procédé suivante après l'étape de procédé c1) :
c2) surveillance de l'atmosphère d'air local en ce qui concerne un paramètre d'incendie avec un détecteur pour reconnaître un paramètre d'incendie,
dans lequel lorsqu'on détecte un début d'incendie ou un incendie, la teneur en oxygène dans l'espace confiné est rapidement abaissée à la concentration réglée si la teneur en oxygène était auparavant à un niveau plus élevé.

14. Procédé selon la revendication 12 ou 13, dans lequel l'amplitude de la plage de réglage est d'approximativement 0,4 % en volume de la teneur en oxygène et se trouve en dessous de la concentration de réglage.

15. Procédé selon l'une des revendications 12 à 14, qui présente en outre une étape de procédé de calcul d'une quantité d'agent d'extinction pour maintenir la concentration de réglage dans l'espace confiné en tenant compte de l'étanchéité à l'air constatée de l'espace confiné.
